# EUROPÄISCHE PATENTANMELDUNG

(11) **EP 1 566 290 A2**
(43) Veröffentlichungstag der Anmeldung: **24.08.2005**
(21) Anmeldenummer: 05003146.7
(22) Anmeldetag: 15.02.2005
(51) Int. Cl.: B60B 31/02

(54) **Verfahren zum Spannen und Zentrieren von eingespeichten Rädern sowie Maschine zur Durchführung des Verfahrens**

(30) Priorität: 19.02.2004 DE 102004008030
(71) Anmelder: Golz, Günter, 33449 Langenberg (DE)
(72) Erfinder: Golz, Günter, 33449 Langenberg (DE)
(74) Vertreter: Rehberg Hüppe + Partner

(57) **Zusammenfassung**

Bei einem Verfahren zum Spannen und Zentrieren von eingespeichten Rädern mit Nabe, Speichen und Felge, wird die Nabe (2) in einer Mittelachse (1) festgespannt und jeder Nippel auf der zugehörigen Speiche (3) unter Spannungsaufbau zur Felge (4) verdreht. Die Felge (4) wird auf eine Bezugsebene (5) aufgelegt und unter Zentrierwirkung zu der Mittelachse (1) der Nabe (2) festgespannt. Es wird eine sich aus der jeweiligen Felgenbreite ergebende Radebene (6) ermittelt und die festgespannte Nabe (2) in der Mittelachse (1) symmetrisch zu der Radebene (6) positioniert. In der zentrierten Position der Nabe (2) und der Felge (4) werden alle Nippel auf den jeweiligen Speichen (3) gleichzeitig verdreht. Eine Maschine zum Spannen und Zentrieren von eingespeichten Rädern weist eine Einrichtung (25) zum Festspannen der Nabe (2) in einer Mittelachse (1) und eine Vielzahl der Anzahl der Speichen (3) entsprechende Spanneinheiten (15,21) zum Verdrehen jeweils eines Nippels auf der zugehörigen Speiche (3) auf. Die Einrichtung (25) zum Festspannen der Nabe (2) ist in der Mittelachse (1) verfahrbar ausgebildet.

## Beschreibung

Die Erfindung betrifft ein Verfahren zum Spannen und Zentrieren von eingespeichten Rädern sowie eine Maschine zur Durchführung des Verfahrens. Die Erfindung lässt sich insbesondere auf die beiden Räder von Fahrrädern, aber auch auf Rollstühle und andere Fahrzeuge anwenden. Kennzeichnend ist dabei immer, dass das jeweilige Rad eine Nabe und eine Felge aufweist, die durch eine Vielzahl von Speichen miteinander verbunden sind. Unter einem eingespeichten Rad wird ein Rad verstanden, bei dem die Speichen in die Durchbrechungen der Nabe eingefädelt sowie durch die Durchbrechungen in der Felge hindurchgeführt sind und auf jede Speiche endseitig ein Nippel so aufgedreht ist, dass aus Nabe, Speichen und Felge eine lose zusammenhängende Einheit geschaffen ist. Ein solches Rad muss gespannt und zentriert werden, wobei die Nippel auf den Enden der Speichen so relativ zueinander verdreht werden müssen, dass eine feste Radeinheit entsteht, bei der die Speichen in gespanntem Zustand die Felge und die Nabe zentrieren und unter möglichst geringen Seiten- und Höhenschlägen verbinden.

Es gibt Räder in verschiedenen Laufraddurchmessern, beispielsweise im Bereich von 24" bis 28". Die Felgen jeder Durchmessergröße können darüber hinaus unterschiedliche Felgenbreite und unterschiedliche Felgentiefe aufweisen. Gleiches gilt für die Naben. Schließlich können auch noch die Anzahl der Speichen variieren. Somit gibt es eine große Vielzahl unterschiedlicher Räder. Die bei weitem überwiegende Anzahl der Räder liegt in einem Durchmesserbereich zwischen 24" und 28" und besitzt 36 Speichen.

### STAND DER TECHNIK

Es ist eine Maschine zum Spannen und Zentrieren von eingespeichten Rädern bekannt, bei denen die Nabe in einer Mittelachse durch eine Einrichtung festgespannt wird. Die lose mit der Nabe über die Speichen verbundene Felge wird auf eine Reihe von Schwenkarmen abgesenkt. Die Seitenschläge der Felge werden gemessen und die Schwenkarme in einer Richtung betätigt, die den Seitenschlägen entgegengerichtet ist. Für jede Speiche ist eine Spanneinrichtung vorgesehen, mit der der Nippel am Ende der Speiche unter Spannungsaufbau zur Felge weiter aufgedreht wird. Die Maschine ist für Räder mit 36 Speichen ausgelegt und gestattet es, in einem sehr kleinen Durchmesserbereich unterschiedliche Durchmessergrößen der Räder zu verarbeiten. Dies gilt auch für unterschiedliche Felgenbreiten und Felgentiefen. Jedoch müssen die zugehörigen Naben zu den Felgen in einem bestimmten Größenverhältnis stehen. Die 36 Spanneinheiten für die 36 Nippel sind auf der einen Seite einer durch das Rad gelegten Radebene angeordnet und behindern einander gegenseitig insbesondere bei der Kombination großer Nabendurchmesser und kleiner Felgendurchmesser. In Zuordnung zu den 36 Speichen sind 18 Hebearme zum Anheben der Felge in eine mittlere Bezugsebene vorgesehen. Jede Hebeeinrichtung ist mit einer Wegmesseinrichtung versehen. Es werden die Seitenschläge gemessen und die Hebeeinrichtungen mit den Schwenkarmen betätigt. Ebenso wie für die Seitenschläge sind auch Sensoren zum Messen von Höhenschlägen vorgesehen. Die Felge befindet sich dabei in einer exzentrischen Lage zu einer Mittelachse. Der Maschine ist ein Rechner zugeordnet, der die entsprechende Anzahl der Umdrehungen für jeden Nippel rechnet, in der Absicht, eine Zentrierwirkung und eine Spannwirkung zu erreichen. Die Vorgänge des Rechnens, Spannens, Messens laufen mehrmals hintereinander ab. Dabei werden auch Entspannungsvorgänge eingeschlossen, also das Zurückdrehen von Nippeln auf der jeweiligen Speiche. Für die Betätigung der Spanneinheiten ist eine Seilzugsteuerung vorgesehen. Der Drehantrieb der Spanneinrichtungen erfolgt über Gleichstrommotore und Kupplungen. Nachteilig an dieser bekannten Maschine ist es, dass nur ein sehr begrenzter Durchmesserbereich, abgestimmt auf bestimmte Naben, verarbeitbar ist. Die Leistung der Maschine ist begrenzt. Infolge der wiederholten Rechen-, Spann- und Messvorgänge dauert das Spannen und Zentrieren eines Rades etwa eine Minute.

Etwa 90 % aller Räder weisen 36 Speichen auf. Die Felgendurchmesser liegen in einem Bereich von 24" bis 28". Die Felgen besitzen unterschiedliche Felgenbreite und Felgenhöhe. Entsprechendes gilt für die zugeordneten Naben. Eine Maschine, die zum Spannen und Zentrieren von Rädern in dem aufgezeigten Bereich geeignet wäre, ist bisher nicht bekannt. Zwar gibt es Maschinen, die in aufwendiger und zeitraubender Weise umrüstbar sind. Diese arbeiten in der Regel mit einer sehr kleinen Anzahl von Spanneinheiten, so dass die 36 Nippel nacheinander gespannt werden müssen, was verfahrenstechnisch ohnehin ungünstig ist. Andererseits resultieren dabei erhebliche Bearbeitungszeiten für das einzelne Rad, so dass größere Leistungen damit nicht erzielbar sind. Oft ist auch die Qualität des Spann- und Zentriervorgangs unzureichend, so dass solche gespannten Räder noch einmal nachgespannt bzw. nachzentriert werden müssen.

### AUFGABE DER ERFINDUNG

Der Erfindung liegt die Aufgabe zugrunde, ein Verfahren zum Spannen und Zentrieren von eingespeichten Rädern und eine dazu geeignete Vorrichtung aufzuzeigen, mit der eingespeichte Räder mit unterschiedlichen Durchmessern in einem festgelegten Durchmesserbereich, z. B. von 24" bis 28", bei unterschiedlichen Felgenbreiten, Felgentiefen, Nabenbreiten und Nabentiefen in kurzen Arbeitstakten gespannt und zentriert werden können. Die Maschine soll auch geeignet sein, Toleranzen innerhalb einer Charge von Rädern auszugleichen.

### LÖSUNG

Die Aufgabe der Erfindung wird erfindungsgemäß durch die Merkmale der unabhängigen Patentansprüche 1 und 4 gelöst.

### BESCHREIBUNG DER ERFINDUNG

Bei dem erfindungsgemäßen Verfahren wird die Achse der Nabe in einer Mittelebene festgespannt. Dies geschieht individuell entsprechend der Länge der Nabe, wobei die Achse an beiden Enden festgelegt und damit in eine Mittelachse gezwungen wird. Es wird dann eine Bezugsebene gebildet, die senkrecht zu der Mittelachse steht. Die Felge wird auf diese Bezugsebene aufgelegt, so dass die eine Seite der Felge oder ein Teil davon in der Bezugsebene zu liegen kommt. Die Felge wird dann auf der Bezugsebene festgespannt. Dies geschieht so, dass die Felge dabei gleichzeitig zu der Mittelachse zentriert wird. Sodann wird eine sich aus der jeweiligen Felgenbreite ergebende Radebene ermittelt. Die Radebene stellt die Symmetrieebene durch die Felge dar. Die Bezugsebene und die Radebene erstrecken sich parallel und in einem Abstand, der der halben Felgenbreite entspricht. Sobald die Felge zur Mittelachse zentriert festgespannt ist, wobei Seiten- und Höhenschlägen entgegengearbeitet wird bzw. diese ausgeglichen werden, wird nun die festgespannte Nabe in Richtung der Mittelachse so verfahren, dass die festgespannte Nabe in die gewünschte relative Position zu der Felge und damit der Radebene kommt. In vielen Fällen wird also die festgespannte Nabe in der Mittelachse symmetrisch zu der Radebene positioniert. Damit befinden sich die Nabe und die Felge in einer zentrierten Position zueinander. In dieser zentrierten Position werden nun alle Nippel auf den jeweiligen Speichen gleichzeitig verdreht, so dass die Speichen unter Spannung geraten und eine gespannte Radeinheit aus Nabe, Speichen und Felge entsteht. Durch das gleichzeitige Spannen erfolgt ein symmetrischer Spannungsaufbau, wobei die zentrierte Position zwischen Felge und Nabe stabilisiert wird. Es ist möglich, die Bezugsebene ohne Veränderung ihrer Position festzulegen und alle Bewegungsabläufe parallel zur Richtung der Mittelachse hierauf abzustimmen. In diesem Fall können einige Spanneinheiten ortsfest angeordnet werden. Gleiches gilt für einen Teil der Spannköpfe zum Zentrieren der Felge.

Das Verfahren ermöglicht sehr kurze Arbeitstakte. Die Bearbeitung eines Rades kann sich dabei auf eine Größenordnung von 10 Sekunden verkürzen, so dass im Vergleich zum Stand der Technik erhebliche Leistungssteigerungen möglich sind. Die Güte des Spann- und Zentriervorgangs reicht im Allgemeinen aus, um ohne Nachspannen und Nachzentrieren auszukommen. Andererseits sind solche zusätzlichen Korrekturmaßnahmen durchaus möglich und auch sinnvoll, wenn insgesamt kleinere Toleranzen eingehalten werden sollen.

Es ist vorteilhaft, die Nippel auf allen Speichen mehr oder weniger gleichzeitig und dabei drehmomentgesteuert zu verdrehen. Dies wirkt sich positiv auf ein gleichmäßiges Spannen über den Umfang des Randes aus.

Besonders vorteilhaft ist es, wenn die beiden Reihen der Nippel auf den Speichen von den beiden Seiten relativ zur Radebene her gespannt werden. Damit werden einerseits die Spanneinheiten zu beiden Seiten der Radebene verteilt angeordnet. Bei 36 Speichen sind 18 Spanneinheiten auf der einen Seite der Radebene angeordnet und greifen von dort aus an den Nippeln der einen Reihe der Speichen an, während die anderen 18 Spanneinheiten auf der anderen Seite angeordnet sind und von dort her eingreifen. Dies bedeutet wiederum, dass für die Anordnung der Spanneinheiten hinreichend Bauraum zur Verfügung steht, so dass sich diese Einheiten nicht gegenseitig behindern. Da die Durchgangslöcher der beiden Reihen der Speichen auf der Felge oft gegeneinander versetzt sind, ist eine reihenweise Behandlung der Nippel von den beiden Seiten her auch unter dem Gesichtspunkt der Krafteinwirkung sinnvoll. Dieses Arbeiten von beiden Seiten her lässt keine resultierenden Kräfte an dem Rad entstehen. Die Kräfte gleichen sich vielmehr aus. Dies kommt der Spann- und Zentriergenauigkeit zugute.

Eine zum Spannen und Zentrieren von eingespeichten Rädern geeignete Maschine besitzt eine Einrichtung zum Festspannen der Nabe in einer Mittelachse und eine Anzahl von Spanneinheiten zum Verdrehen jeweils eines Nippels auf der zugehörigen Speiche. Die Vielzahl der Spanneinheiten entspricht der Anzahl der Speichen. Wenn die Maschine für 36 Speichen ausgelegt ist, sind 18 Spanneinheiten auf der einen Seite der Radebene und 18 Spanneinheiten auf der anderen Seite der Radebene vorgesehen. Es versteht sich, dass die Maschine auch für eine andere Anzahl von Speichen konstruiert bzw. ausgelegt werden kann. Es ist immer so, dass die Hälfte der Anzahl der Speichen, also eine Speichenreihe von der einen Seite und die andere Reihe der Speichen von der anderen Seite her bearbeitet wird. Die Einrichtung zum Festspannen der Nabe ist dagegen in der Mittelachse verfahrbar ausgebildet. Durch diese Verfahrbarkeit wird die Nabe in der Mittelachse so verfahren, dass sie in der vorgesehenen Relativlage zu der Felge zentriert ist und sich in axialer Richtung an der vorgesehenen Position befindet. In dieser Stellung hält dann die Einrichtung zum Festspannen der Nabe die Nabe fest und damit relativ zur zentrierten und ebenfalls festgehaltenen Felge. Es ist auch eine Einrichtung zum zentrierenden Festspannen der Felge auf eine Bezugsebene relativ zur Mittelachse vorgesehen. Die Bezugsebene bildet eine Seitenebene der Felge. Die Bezugsebene ist senkrecht zu der Mittelachse vorgesehen und festgelegt. Die Einrichtung zum zentrierenden Festspannen der Felge wird zumindest teilweise bei jedem zu bearbeitenden Rad betätigt, also bewegt, so dass damit eine individuelle Anpassung an Toleranzen auch innerhalb einer Baureihe möglich ist. Die Spanneinheiten sind auf beide Seiten der Bezugsebene bzw. der Radebene verteilt vorgesehen und angeordnet. Es steht daher genügend Bau- und Arbeitsraum für die Spanneinheiten zur Verfügung. Diese behindern sich nicht mehr gegenseitig und es sind sämtliche Naben- und Felgenformen und -gestaltungen von der neuen Maschine zu verarbeiten. Umrüstzeiten auf andere Durchmesser sind sehr gering oder entfallen. Felgendurchmesser, Felgenbreite, Felgentiefe, Nabenbreite und Nabentiefe können als wählbare Parameter in eine Steuer- und Regeleinrichtung für die Maschine eingegeben werden. Ein Teil dieser Parameter kann auch mit Sensoren an der Maschine jeweils gemessen werden, so dass diesbezüglich keine Umrüstzeiten anfallen. Es kann die gesamte Variationsbreite der Räder in einem relativ großen Durchmesserbereich, insbesondere zwischen 24" und 28", verarbeitet werden. Dies geschieht in relativ kurzen Taktzeiten in der Größenordnung von 10 Sekunden für ein Rad, so dass die Maschine eine sehr viel größere Leistung besitzt als bekannte Maschinen. Auch die Genauigkeit der Bearbeitung und die Qualität des Arbeitsergebnisses sind besser als im Stand der Technik. Eine wesentliche Ursache dafür ist das gleichzeitige Spannen sämtlicher Nippel anstelle eines Nacheinanderspannens.

Die Einrichtung zum zentrierenden Festspannen der Felge relativ zur Mittelachse auf einer Bezugsebene kann eine zumindest der einfachen Anzahl der Speichen entsprechende Vielzahl von Spannköpfen aufweisen. Die Spannköpfe sind genau dort angeordnet, wo die Felge auch die Durchgangslöcher für die Nippel besitzt. Dies bedeutet, dass an jeder Speiche die Felge auch radial zentriert festgehalten ist, wodurch die Seiten- und Höhenschläge erheblich reduziert und in einen Bereich verringert werden, in dem sie nicht stören. Es ist aber auch möglich, die vergleichsweise doppelte Anzahl von Spannköpfen vorzusehen, also z. B. 72 Spannköpfe für eine auf 36 Speichen ausgelegte Maschine. Die einen 36 Spannköpfe greifen auf der einen Seite der Felge, also an der entsprechenden Felgenseitenwand, an. Die anderen 36 Spannköpfe greifen an der anderen Seitenwand der Felge an. Es ist möglich, nur Spannköpfe zu verwenden, die auch eine radiale Zentrierwirkung auf die Felge ausüben. Eine andere Möglichkeit besteht darin, die Zentrierung nur durch die Hälfte der Spannköpfe durchzuführen und die andere Hälfte der Spannköpfe nur entsprechend axial parallel zur Mittelachse zu bewegen. Alle Spannköpfe können radial zur Mittelachse gemeinsam oder in den beiden Gruppen bewegbar angeordnet sein. Die eine Hälfte der Spannköpfe ist in der Regel in einer Richtung parallel zur Mittelachse nicht beweglich, während die andere Hälfte der Spannköpfe auf unterschiedliche Felgenbreiten Rücksicht nimmt.

Die Einrichtung zum Festspannen der Nabe in der Mittelachse weist zwei Spannfutter auf, so dass die Achse der Nabe an beiden Enden ergriffen und damit zur Mittelachse ausgerichtet gehalten werden kann. Hierzu sind die beiden Spannfutter relativ zueinander bewegbar, und zwar in Richtung der Mittelachse. Die beiden Spannfutter sind aber dann auch gemeinsam in der Mittelachse verfahrbar, um die Nabe insgesamt in die vorgesehene Relativposition zu der zur Mittelachse zentrierten Felge zu bringen. Die Spannköpfe sind damit beidseitig der Bezugsebene bzw. der Radebene vorgesehen und radial zur Mittelachse zentrierend verfahrbar. Diese Verfahrbarkeit wird individuell an jedem Rad genutzt. Zum anderen können damit unterschiedliche Laufraddurchmesser verarbeitet werden. Wenn die auf einer Seite der Bezugsebene bzw. der Radebene vorgesehenen Spannköpfe auch in einer Richtung parallel zur Mittelachse verfahrbar sind, dient dies einerseits dem Festspannen der Felge in der zentrierten Stellung und andererseits der Verarbeitung unterschiedlicher Felgenbreiten. Die Bezugsebene wird durch die eine Hälfte der Spannköpfe festgelegt bzw. bestimmt. Je nach den Felgenbreiten ergeben sich dann parallel zu dieser Bezugsebene unterschiedliche Radebenen. Unter der Radebene wird die Symmetrieebene durch die Felge verstanden.

In besonders bevorzugter Ausführungsform weist die Maschine eine horizontal ausgerichtete und festgelegte Bezugsebene auf. Die Spanneinheiten zum Verdrehen der Nippel, die Spannköpfe zum Zentrieren und Fixieren der Felge sowie die Spannfutter zum Zentrieren der Achse der Nabe sind jeweils anteilmäßig hälftig geteilt und symmetrisch zu der Bezugsebene bzw. der Radebene angeordnet. Auf diese Weise wird nicht nur die Zentrierqualität gefördert, sondern die Spanneinheiten zum Verdrehen der Nippel erhalten genügend Bau- und Bewegungsraum, um sämtlichen Kombinationen der Gestaltungen von Felgen und Naben Rechnung zu tragen. Dies gilt auch dann, wenn beispielsweise eine Hochflanschnabe mit einer Felge mit relativ kleinem Durchmesser zu kombinieren ist, wobei die Speichen in eine besonders ausgeprägte Schräglage geraten. Die Kombination großer Felgendurchmesser und kleiner Nabenbreite und -höhe ist vergleichsweise weniger kritisch.

Die Maschine weist zwei Gruppen von Spanneinheiten zum Verdrehen der Nippel auf, also z. B. bei 36 Speichen 18 Spanneinheiten unterhalb der Bezugsebene und 18 Spanneinheiten oberhalb der Bezugsebene. Die Spanneinheiten unterhalb der Bezugsebene können ortsfest vorgesehen sein. Dies bedeutet, dass sie in Richtung der Mittelachse nicht verfahrbar sind. Es versteht sich, dass sie natürlich zur Überbrückung unterschiedlicher Felgendurchmesser radial zur Mittelachse beweglich sein müssen. Auch in axialer Richtung müssen Elemente der Spanneinrichtung im Hinblick auf unterschiedliche Felgenbreiten beweglich sein. Die Spanneinheiten zum Verdrehen der Nippel auf der anderen Seite der Bezugsebene sind dagegen insgesamt in Richtung der Mittelachse verfahrbar. Dies dient dazu, die Maschine zu öffnen und zu schließen, die Elemente in eine günstige Arbeitsposition zu bringen und trotzdem neue eingespeichte Räder nacheinander in die Maschine einzuführen, dort zu bearbeiten und wieder zu entnehmen. Für die Ausbildung und Anordnung der Spannköpfe zum Zentrieren und Fixieren der Felge gilt Entsprechendes, wie dies anhand der Spanneinheiten zum Verdrehen der Nippel bereits ausgeführt wurde. Es ist natürlich auch möglich, sämtliche Spanneinheiten und Spannköpfe in Richtung der Mittelachse verfahrbar anzuordnen. Damit erhöht sich der bauliche Aufwand entsprechend. Hierdurch wird dann eine Radebene dauerhaft festgelegt und es ergeben sich unterschiedliche Bezugsebenen je nach den unterschiedlichen Felgenbreiten.

Es sind Sensoren zum Erfassen der Wege und Positionen der Spannfutter und/oder der Spannköpfe vorgesehen. Über die Sensoren, die zum Erfassen der Wege und der Positionen der Spannfutter dienen, kann in Verbindung mit einer Steuer- und Regeleinrichtung die genaue Relativposition zwischen Nabe und Felge eingestellt werden. In einer einfachen Position, wie es beispielsweise für Vorderräder von Fahrrädern gängig ist, wird auch die Nabe symmetrisch zur Radebene positioniert. Insbesondere bei angetriebenen Hinterrädern mit Zahnkränzen ist die Nabe jedoch außermittig zur Radebene nach der einen Seite etwas versetzt vorgesehen. Über die Sensoren an den Spannköpfen kann die jeweilige Felgenbreite ermittelt und damit die Radebene festgelegt werden. Auch die Festlegung der Wege der Spanneinheiten zueinander kann damit gesteuert werden. Es ist natürlich auch möglich, auf die Anordnung von Sensoren an den Spannköpfen zu verzichten und beispielsweise die Felgenbreite bei einer Serie zu bearbeitender Räder in die Steuereinrichtung als Parameter einzugeben. Auch andere Parameter können eingegeben werden, um so die Elemente der Maschine in eine Ausgangslage zu bringen, aus der heraus dann die Bearbeitung einer Serie von gleichen Rädern beginnt.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine schematisierte Vertikalansicht durch wesentliche Elemente der Maschine.
- **Fig. 2**: zeigt eine Ansicht von Elementen der Maschine über den Umfang, also gemäß der Linie II-II in Fig. 1.
- **Fig. 3**: zeigt eine ähnliche Darstellung wie Fig. 1, jedoch in etwas auseinandergezogener Darstellungsweise, um die Übersichtlichkeit und den symmetrischen Aufbau der Maschine zu verdeutlichen.
- **Fig. 4**: zeigt eine Seitenansicht einer einzelnen Spanneinheit zum Verdrehen eines Nippels auf einer Speiche.
- **Fig. 5**: zeigt eine Draufsicht auf eine bewegliche Platte zum zentrierenden Verfahren der Spanneinheiten und/oder der Spannköpfe.
- **Fig. 6**: zeigt eine Darstellung der beweglichen Platte und der festen Platte übereinander.

### FIGURENBESCHREIBUNG

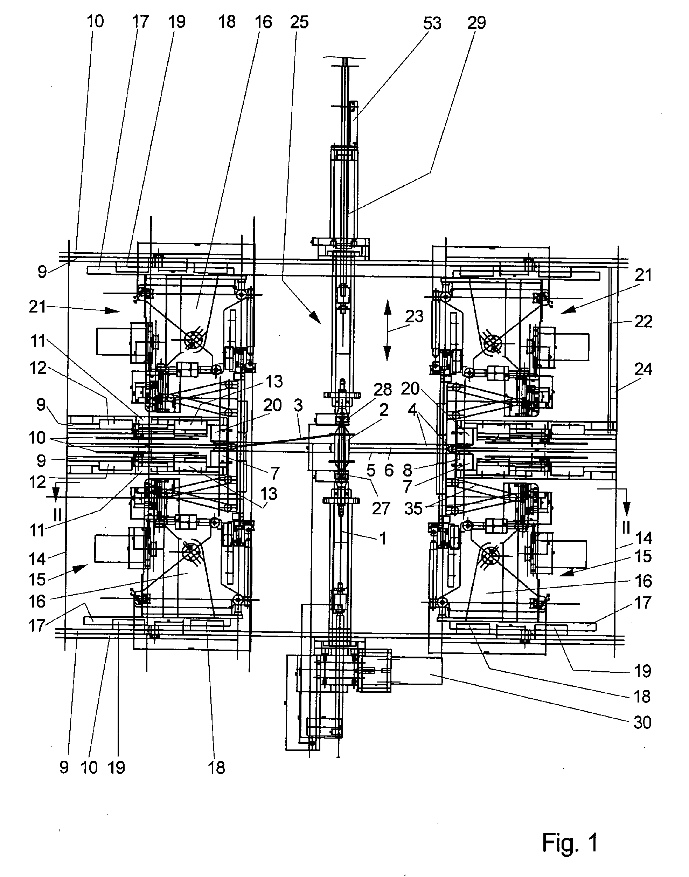

Die in Fig. 1 schematisch verdeutlichte Maschine besitzt ein Maschinengestell, welches der Übersichtlichkeit halber nicht dargestellt ist. In der Maschine werden die Felgen liegend bearbeitet, d. h. in der Mitte der Maschine befindet sich eine vertikale Mittelachse 1. Es versteht sich, dass die Maschine auch um 90° gedreht gebaut bzw. eingesetzt werden könnte, also mit horizontal ausgerichteter Mittelachse 1. Es wird nachfolgend jedoch nur eine Maschine mit vertikaler Mittelachse 1 beschrieben.

In der Mittelachse 1 ist eine Nabe 2 dargestellt. Die Flansche der Nabe sind erkennbar. Von dem einen Flansch der Nabe 2 ist eine einzelne Speiche 3 verdeutlicht, die zu der oberen Speichenreihe gehört. Die obere Speichenreihe besitzt 18 Speichen. Es wird eine Maschine beschrieben, die für 36 Speichen konzipiert ist. Es versteht sich, dass auch die untere Speichenreihe 18 Speichen aufweist, von denen jedoch keine dargestellt ist. Die Speiche 3 bzw. die Speichen führen von der Nabe 2 zu einer Felge 4, die im Schnitt sowie in der Halbansicht verdeutlicht ist. Die Felge 4 ist mit der Außenseite ihrer einen Seitenwand in einer Bezugsebene 5 angeordnet. Parallel dazu ist eine Radebene 6 oder Felgenebene dargestellt. Die Radebene 6 ist die Mittelebene der Felge 4. Der Abstand der Radebene 6 von der Bezugsebene 5 entspricht der halben Felgenbreite. Es versteht sich, dass bei unterschiedlich breiten Felgen 4 der Abstand zwischen Bezugsebene 5 und Radebene 6 variiert. Bei der hier beschriebenen Ausführungsform der Maschine ist die Bezugsebene 5 festgelegt bzw. festgehalten. Sie befindet sich immer auf der gleichen Höhe.

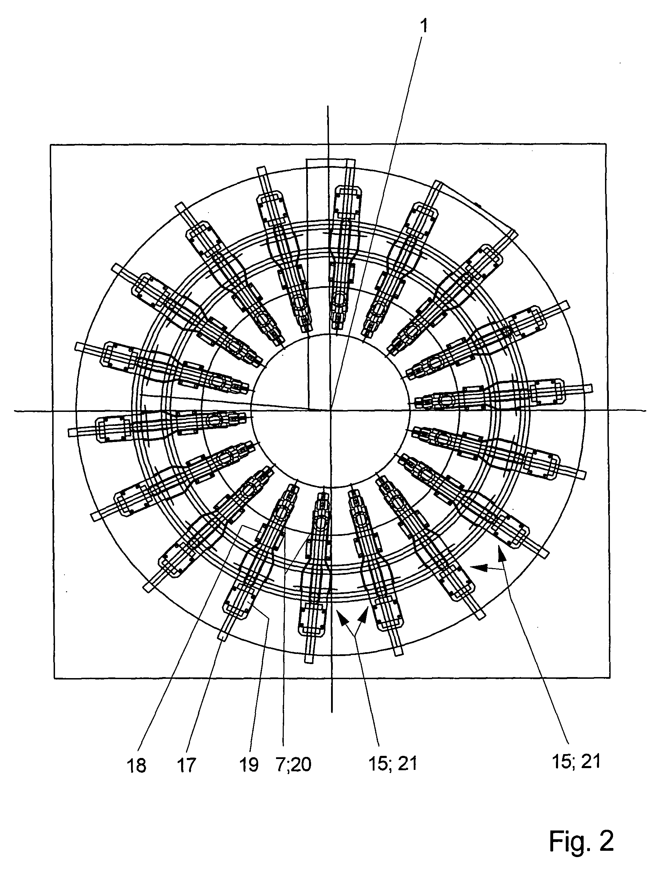

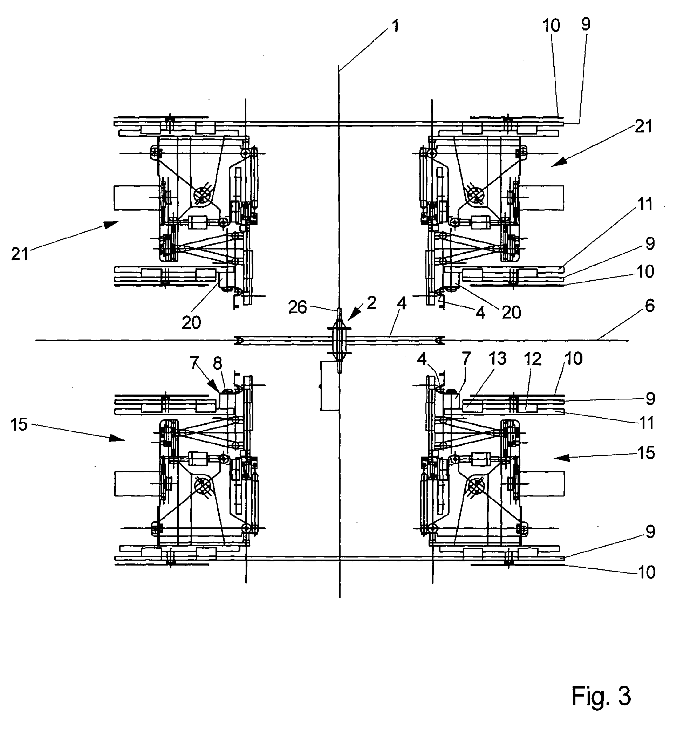

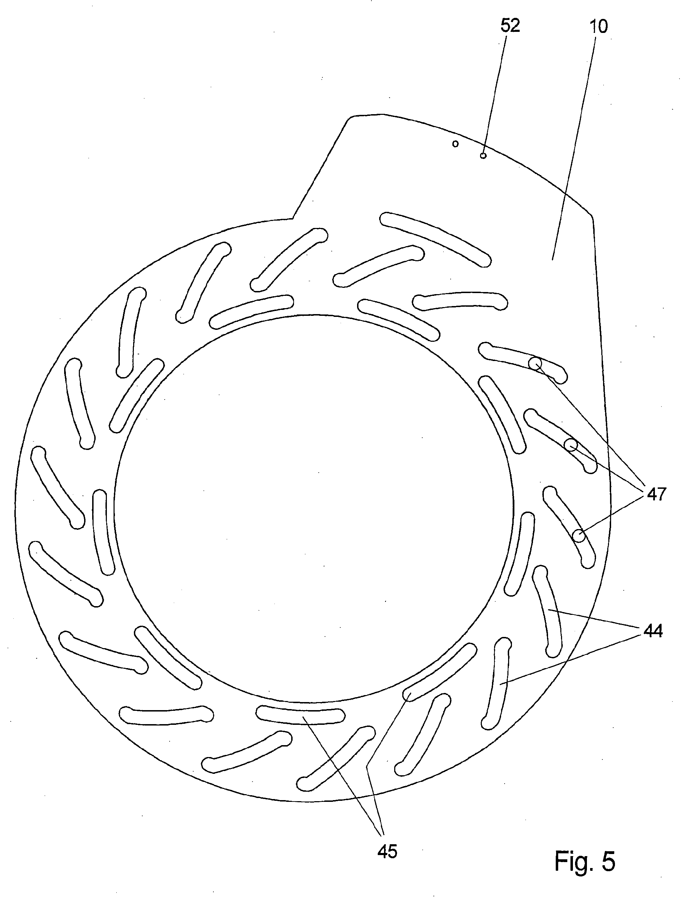

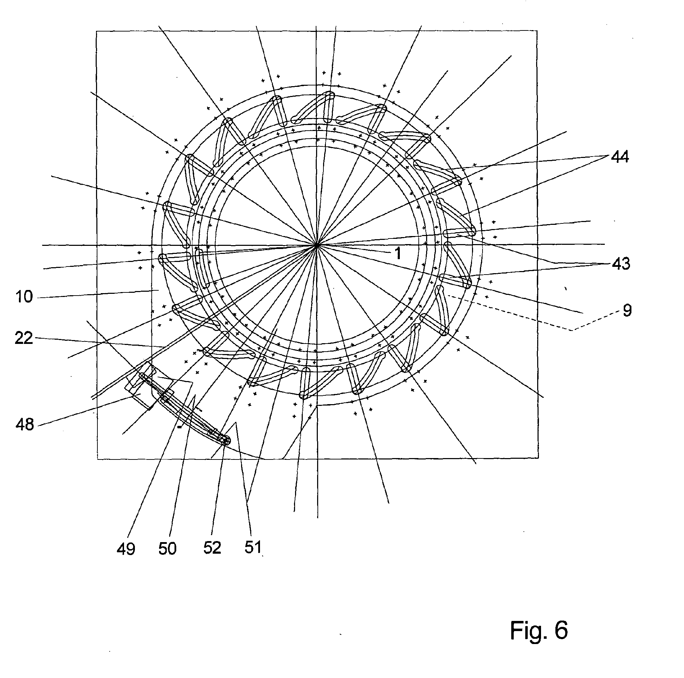

Die Bezugsebene 5 wie auch die Radebene 6 sind Ebenen, die senkrecht auf der vertikalen Mittelachse angeordnet sind. Die Höhe der Bezugsebene 5 wird durch 18 untere Spannköpfe 7, die, wie aus der Darstellung der Fig. 2 erkennbar ist, in einem gegenseitigen Winkelabstand von 20° gleichmäßig über den Umfang verteilt vorgesehen sind. Die Spannköpfe 7 besitzen einen zylindrischen Abschnitt (siehe auch Fig. 3), dessen obere Stirnfläche eine Auflage für die Felgenseitenwand der Felge 4 bilden, so dass damit die Bezugsebene 5 festgelegt wird. Von dieser zylindrischen Seitenwand ragen nach oben kegelartige Fortsätze 8 ab, die die Felge 4 bzw. den einen Felgenrand von außen hintergreifen können. Die Spannköpfe 7 sind in radialer Richtung zu der Mittelachse 1 bewegbar bzw. verfahrbar. Die 18 unteren Spannköpfe 7 werden dabei z. B. über eine Einheit aus einer festen Platte 9 und einer beweglichen Platte 10 radial bewegt, wodurch die Felge 4 zur Mittelachse 1 zentriert wird. Einheiten aus einer festen Platte 9 und einer beweglichen Platte 10 werden in der Maschine vierfach eingesetzt und nachfolgend in Verbindung mit den Fig. 5 und 6 im Einzelnen erläutert. Jeder Spannkopf 7 sitzt an einer Gleitschiene 11. Jede Gleitschiene 11 ist in Gleitlagern 12 und 13 radial zur Mittelachse 1 geführt. Die feste Platte 9 für die unteren Spannköpfe 7 ist ortsfest an vier Säulen 14 gelagert bzw. gehalten, von denen der Übersichtlichkeit halber in Fig. 1 nur zwei Säulen 14 dargestellt sind. Die Säulen 14 sind an einem nicht dargestellten Maschinengestell vorgesehen und erstrecken sich vertikal, also parallel zu der Mittelebene 1.

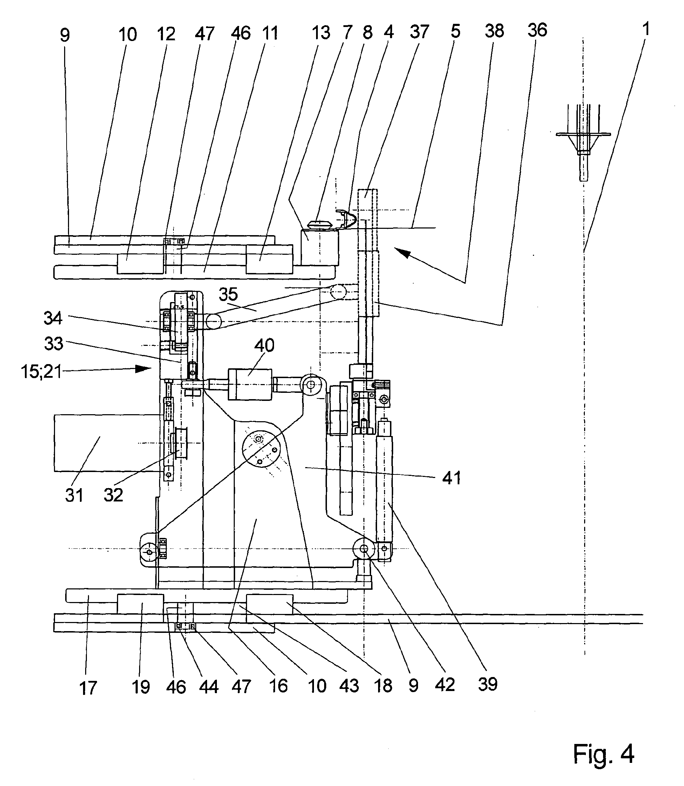

Unterhalb der Gleitschienen 11 und unterhalb der Spannköpfe 7 sowie ohne Verbindung zu diesen befinden sich 18 Spanneinheiten 15 zum Spannen, d. h. zum Verdrehen der Nippel der unteren Speichenreihe. Eine einzelne Spanneinheit 15 ist in Fig. 4 verdeutlicht. Fig. 2 lässt erkennen, dass die Spanneinheiten 15 ebenso wie die unteren Spannköpfe 7 in einem Winkel von 20° über den Umfang zueinander gleichmäßig verteilt angeordnet sind. Jede Spanneinheit 15 weist ein festes Gehäuse 16 auf, welches mit einer Gleitschiene 17 verbunden ist. Jede Gleitschiene 17 ist in zwei Gleitlagern 18 und 19 radial zu der Mittelachse 1 geführt. Die Gleitlager 18 und 19 sind wiederum auf einer festen Platte 9 angeordnet, die mit einer beweglichen Platte 10 zusammenarbeitet. Die Einheit aus fester Platte 9 und beweglicher Platte 10 kann identisch zu der Einheit aus der festen Platte 9 und der beweglichen Platte 10 ausgebildet sein, die im Zusammenhang mit den unteren Spannköpfen 7 beschrieben wurde. Da diese Einheiten aus festen Platten 9 und beweglichen Platten 10 vierfach an der Maschine vorkommen, besitzen sie jeweils das gleiche Bezugszeichen, obwohl es sich insoweit um mehrfach vorkommende Teile handelt. Auch die feste Platte 9 für die Spanneinrichtungen 15 ist ortsfest an den Säulen 14 gelagert, so dass sich der vertikale Abstand zwischen den Spanneinheiten 15 und den unteren Spannköpfen 7 nicht verändert. Die feste Platte 9 der Spannköpfe 7 und die feste Platte 9 der Spanneinheiten 15 können zusätzlich durch eine oder mehrere vertikal angeordnete Verbindungsplatten ausgesteift sein, die hier der Übersichtlichkeit halber jedoch nicht dargestellt sind. Die Spannköpfe 7 und die Spanneinheiten 15 sind ausschließlich radial zur Mittelachse 1 verfahrbar. Sie sind als Einheiten nicht in einer Richtung parallel zur axialen Erstreckung der Mittelachse 1 verfahrbar.

Die Maschine ist bezüglich der Bezugsebene 5 bzw. der Radebene 6 unter Berücksichtigung eines Winkels von 10° für 36 Speichen symmetrisch aufgebaut. Dies wird insbesondere durch Fig. 3 verdeutlicht. Ebenso wie es untere Spannköpfe 7 gibt, gibt es auch 18 obere Spannköpfe 20. Jeder obere Spannkopf 20 ist ebenfalls auf einer Gleitschiene 11 gelagert und in Gleitlagern 12 und 13 radial zur vertikalen Mittelachse 1 geführt. Auch diese Bewegung wird durch eine Einheit aus einer festen Platte 9 und einer beweglichen Platte 10 herbeigeführt. Die oberen Spannköpfe 20 können genau so ausgebildet sein wie die unteren Spannköpfe 7, also mit kegeligen Fortsätzen, die die andere Seitenwandung der Felge 4 von außen ergreifen und zentrieren. Es ist jedoch bevorzugt, die Fortsätze 8 an den oberen Spannköpfen 20 wegzulassen, die Spannköpfe 20 etwas näher zu der Mittelachse zu positionieren und lediglich gegen die äußere Stirnwandung der Felge 4 anzudrücken, um die Felge 4 relativ zur Bezugsebene 5 festzulegen und damit Seitenschlägen der Felge entgegenzuwirken. Die Zentrierwirkung und der Ausgleich der Höhenschläge geschieht in diesem Fall allein durch die unteren Spannköpfe 7.

Ebenso wie es 18 untere Spanneinheiten 15 gibt, gibt es auch 18 obere Spanneinheiten 21. Die oberen Spanneinheiten 21 und die unteren Spanneinheiten 15 sind identisch ausgebildet und umgekehrt angeordnet sowie außerdem um 10° gedreht, also etwa symmetrisch zur Bezugsebene 5 bzw. Radebene 6. Die eingespeichten Räder werden so winkel- und seitenrichtig gedreht mit einer nicht dargestellten Transporteinrichtung in die Maschine eingebracht, dass die Speichen der unteren Reihe in eine den unteren Spanneinheiten 15 zugeordnete Position und die Speichen der oberen Reihe gleichzeitig in eine den oberen Spanneinheiten 21 zugeordnete Position geraten. Auch die oberen Spanneinheiten 21 besitzen ein Gehäuse 16 auf einer entsprechenden Gleitschiene 17, die in Gleitlagern 18 und 19 einer weiteren Einheit aus einer festen Platte 9 und einer beweglichen Platte 10 radial geführt sind. Die Einheit aus fester Platte 9 und beweglicher Platte 10, die die oberen Spannköpfe 20 tragen, und die Einheit aus fester Platte 9 und beweglicher Platte 10, die die oberen Spanneinheiten 21 trägt, sind über eine oder mehrere Verbindungsplatten 22 zu einer insgesamt beweglichen Einheit verbunden. Diese Einheit ist gemäß Doppelpfeil 23 vertikal verfahrbar, und zwar relativ zu den stillstehenden unteren Spannköpfen 7 und unteren Spanneinheiten 15. Auf diese Weise kann die Maschine geöffnet werden. Fig. 3 zeigt gleichzeitig eine solche Öffnungsstellung, in der ein eingespeichtes Rad mit Nabe 2, Felge 4 und den Speichen 3 in horizontaler Richtung in die Maschine eingefahren und auf die Stirnseiten der zylindrischen Abschnitte der unteren Spannköpfe 8 abgelegt werden kann. In Fig. 3 ist die Felge 4 dreimal dargestellt, also in den jeweiligen Relativlagen zu den Elementen, um dies zu verdeutlichen, obwohl natürlich nur immer ein Rad bzw. eine Felge 4 in der Maschine bearbeitet wird. Die Einheiten aus festen Platten 9 und beweglichen Platten 10 für die oberen Spannköpfe 20 und die oberen Spanneinheiten 21 sind auf den Säulen 14 vertikal geführt. Beispielsweise zwischen einer Säule 14 und einer Verbindungsplatte 22 kann ein Sensor 24 zum Erfassen des Weges bzw. der Position der oberen vertikal verfahrbaren gemeinsamen Einheit vorgesehen sein. Der Sensor 24 dient gleichzeitig zum Erfassen der Felgenbreite. Über eine hier nicht dargestellte Steuer- und Regeleinrichtung wird die obere gemeinsame Einheit beispielsweise über entsprechende Zylinder oder auch Servomotoren vertikal bewegt und gesteuert. Dabei ist eine Ausgangslage ansteuerbar, wie sie Fig. 3 verdeutlicht, sowie eine Arbeitslage, wie sie Fig. 1 verdeutlicht.

Die Maschine weist auch eine Einrichtung 25 zum Festspannen der Nabe bzw. der Achse 26 der Nabe 2 an beiden Enden auf. Hierzu sind zwei Spannfutter 27 und 28 vorgesehen. Das Spannfutter 27 ist unterhalb der Bezugsebene 5 bzw. der Radebene 6 angeordnet, das Spannfutter 28 oberhalb dieser Ebene. Die Spannfutter 27 und 28 sind wiederum identisch ausgebildet und symmetrisch verteilt angeordnet. Das Spannfutter 27 befindet sich in einer geeigneten Ausgangslage zum Ergreifen des unteren Endes der Achse 26, während das obere Spannfutter 28 durch einen Luftzylinder 29 in vertikaler Richtung angetrieben wird. Die Einrichtung 25 weist auch einen Sensor 53 zum Erfassen der Breite der Nabe 2 sowie zur Anzeige der Position der Nabe 2 nach dem gemeinsamen Verfahren der Nabe 2 über die geschlossenen Spannfutter 27 und 28 relativ zur Felge 4 bzw. der Bezugsebene 5 auf.

Sobald die beiden Spannfutter 27 und 28 Kontakt zu den entsprechenden Anlageflächen an der Nabe 2 halten, schließen sich die Spannfutter 27 und 28 und die Achse 26 und damit wird die Nabe 2 in der Mittelachse 1 zentriert gehalten. Die gesamte so gebildete Einrichtung 25 wird mit Hilfe eines Antriebes 30, der als Servomotor ausgebildet sein kann, in vertikaler Richtung, also in der Mittelachse 1, verfahrbar angeordnet, damit die zur Mittelachse 1 zentriert festgehaltene Nabe insgesamt in die geeignete Relativposition zu der Radebene 6 verfahren und dort fixiert gehalten werden kann. Damit ist erkennbar, dass die Nabe 2 und die Felge 4 zentriert zueinander und in der vorgesehenen Relativposition fixierbar sind, so dass dann die Spanneinheiten 15 und 21 zum Verdrehen der Nippel auf sämtlichen Speichen gleichzeitig eingesetzt werden können, so dass aus der losen Einheit aus Nabe 2, Speichen 3 und Felge 4 eine gespannte Laufradeinheit entsteht.

In Fig. 4 ist eine einzelne Spanneinheit 15 bzw. 21 dargestellt. Die Spanneinheit weist ein Gehäuse 16 auf, welches auf der Gleitschiene 17 gelagert bzw. mit dieser verbunden ist. Das Gehäuse 16 trägt einen Servomotor 31. Der Servomotor 31 wird drehmomentgesteuert betrieben und erlaubt das genaue Anfahren vorher festgelegter Positionen. Der Servomotor 31 besitzt ein Ritzel 32, von dem ein nur schematisch angedeuteter Riemen 33 zu einem ebenfalls am Gehäuse 16 gelagerten Rad 34 führt. Mit dem Rad 34 ist eine Kardanwelle 35 drehfest verbunden, mit deren Hilfe der Drehantrieb weitergeleitet und in ein Gehäuseteil 36 übertragen wird, in welchem ein Zahnradzug aus mehreren Zahnrädern (nicht dargestellt) angeordnet ist. Das Gehäuseteil 36 besitzt an seinem oberen Ende eine Gabel 37, mit der es über eine Speiche übergreifen kann. Solche Einheiten werden als Händchen 38 bezeichnet. Das oberste Zahnrad des Getriebezuges ist geschlitzt ausgebildet und treibt eine ebenfalls geschlitzte Nuss an, die eine Vierkantfläche zum Angriff an dem Nippel auf einer Speiche besitzt. Durch die in Fig. 4 ersichtliche Relativlage ist erkennbar, dass das Händchen 38 aus dem Innenraum der Felge 4 heraus an dem nicht dargestellten Nippel angreift. Auf diese Weise wird der Nippel auf der betreffenden Speiche verdreht und dabei gespannt.

Für die Vertikalbewegung des Händchens 38 relativ zum Gehäuse 16 ist ein Luftzylinder 39 vorgesehen. Das Händchen 38 ist in seiner Arbeitsstellung dargestellt. Fig. 1 lässt auch anhand der Darstellung der Kardanwelle 35 die andere Stellung erkennen, in welcher das Händchen aus dem Erstreckungsbereich der Speichen herausgefahren ist. Die nicht dargestellte Nuss mit der Vierkant-Angriffsfläche an dem Nippel kann sich entsprechend der Schräglage an die jeweilige Speiche bzw. den Nippel anlegen. Damit die Nuss bzw. das Händchen 38 auf die Vierkantfläche des Nippels aufgeschoben werden kann, ist eine Radialbewegung zur Mittelachse 1 erforderlich. Hierzu dient ein Luftzylinder 40, der an einem Schwenkgehäuse 41 angreift, welches um eine Schwenkachse 42 an dem festen Gehäuse 16 schwenkbar ist. Diese Schwenkbewegung kann durchaus für die radiale Bewegung zur Mittelachse 1 genutzt werden, da das Händchen 38 jegliche Winkelanpassung ermöglicht.

Fig. 4 lässt auch bereits Teile der Einheit aus der jeweiligen festen Platte 9 und der jeweiligen beweglichen Platte 10 erkennen. In diesem Zusammenhang wird auf die Fig. 4 bis 6 hingewiesen. In der jeweiligen festen Platte 9 befinden sich Langlöcher 43, die, wie Fig. 6 erkennen lässt, im Wesentlichen radial angeordnet sind. In der beweglichen Platte 10 befinden sich Langlöcher 44, die schräg verlaufend (Fig. 5) vorgesehen sind. Die Langlöcher 43 und 44 überdecken sich teilweise bzw. bereichsweise und sind einander zugeordnet. Die bewegliche Platte 10 ist lediglich um die Mittelachse 1 drehbar angeordnet. Um diese Drehbarkeit zu ermöglichen, sind tangential angeordnete Langlöcher 45 vorgesehen, in die entsprechende Bolzen an der jeweiligen festen Platte 9 (nicht dargestellt) eingreifen. An der jeweiligen Gleitschiene 17 bzw. 11 sind Bolzen 46 befestigt, die die Langlöcher 43 durchsetzen und mit Hilfe einer Rolle 47 oder eines Kugellagers in die Langlöcher 44 der beweglichen Platte 10 eingreifen. Damit wird erkennbar, dass bei Verdrehung der beweglichen Platte 10 um die Mittelachse 1 die betreffenden Gleitschienen 17 bzw. 11 eine gesteuerte radiale Bewegung auf die Mittelachse 1 bzw. in der Gegenrichtung dazu ausüben. Diese Bewegung wird hinsichtlich der Spannköpfe 7 und 20 für die Zentrierung der Felge 4 genutzt. Bezüglich der Spanneinheiten 15 und 21 dient diese Bewegung dazu, die Händchen 38 in dem Innenraum der Felge 4 zu platzieren, um von innen an den Nippeln angreifen zu können. Dies geschieht wiederum in Abhängigkeit von den verschiedenen Laufraddurchmessern bzw. Felgendurchmessern. Die Drehbewegung der beweglichen Platte 10 wird durch einen Servomotor 48 an jeder beweglichen Platte 10 gesteuert herbeigeführt. Dem Servomotor 48 ist ein Getriebe 49 nachgeordnet, über welches eine Spindel 50 angetrieben wird, die letztlich in einem Gelenkkopf 51 endet, der letztlich an einer Eingriffsstelle 52 an der beweglichen Platte angreift. Es versteht sich, dass an jeder Gleitschiene 17 bzw. 11 je ein Bolzen 46 mit je einer Rolle 47 angeordnet ist, obwohl in Fig. 5 nur drei Rollen 47 dargestellt sind. Dies bedeutet, dass alle Einheiten immer gemeinsam zentrierend zu der Mittelachse 1 bewegt werden.

### BEZUGSZEICHENLISTE

- 1: Mittelachse
- 2: Nabe
- 3: Speiche
- 4: Felge
- 5: Bezugsebene
- 6: Radebene
- 7: unterer Spannkopf
- 8: Fortsatz
- 9: feste Platte
- 10: bewegliche Platte

- 11: Gleitschiene
- 12: Gleitlager
- 13: Gleitlager
- 14: Säule
- 15: Spanneinheit
- 16: Gehäuse
- 17: Gleitschiene
- 18: Gleitlager
- 19: Gleitlager
- 20: oberer Spannkopf

- 21: obere Spanneinheit
- 22: Verbindungsplatte
- 23: Doppelpfeil
- 24: Sensor
- 25: Einrichtung
- 26: Achse
- 27: Spannfutter
- 28: Spannfutter
- 29: Luftzylinder
- 30: Antrieb

- 31: Servomotor
- 32: Ritzel
- 33: Riemen
- 34: Rad
- 35: Kardanwelle
- 36: Gehäuseteil
- 37: Gabel
- 38: Händchen
- 39: Luftzylinder
- 40: Luftzylinder

- 41: Schwenkgehäuse
- 42: Schwenkachse
- 43: Langloch
- 44: Langloch
- 45: Langloch
- 46: Bolzen
- 47: Rolle

- 48: Servomotor
- 49: Getriebe
- 50: Spindel
- 51: Gelenkkopf
- 52: Angriffsstelle
- 53: Sensor

## Patentansprüche

1. Verfahren zum Spannen und Zentrieren von eingespeichten Rädern mit Nabe, Speichen und Felge, indem die Nabe (2) in einer Mittelachse (1) festgespannt und jeder Nippel auf der zugehörigen Speiche (3) unter Spannungsaufbau zur Felge (4) verdreht wird, **dadurch gekennzeichnet, dass** die Felge (4) auf eine Bezugsebene (5) aufgelegt und unter Zentrierwirkung zu der Mittelachse (1) der Nabe (2) festgespannt wird, dass eine sich aus der jeweiligen Felgenbreite ergebende Radebene (6) ermittelt und die festgespannte Nabe (2) in der Mittelachse (1) symmetrisch zu der Radebene (6) positioniert wird, und dass in der zentrierten Position der Nabe (2) und der Felge (4) alle Nippel auf den jeweiligen Speichen
(3) gleichzeitig verdreht werden.

2. Verfahren nach Anspruch 1, **dadurch gekennzeichnet, dass** in der zentrierten Position der Nabe (2) und der Felge (4) alle Nippel auf den jeweiligen Speichen (3) gleichzeitig drehmomentgesteuert verdreht werden.

3. Verfahren nach Anspruch 1 oder 2, **dadurch gekennzeichnet, dass** die beiden Reihen der Nippel auf den Speichen (3) von den beiden Seiten relativ zur Radebene (6) gespannt werden.

4. Maschine zum Spannen und Zentrieren von eingespeichten Rädern mit Nabe, Speichen und Felge, mit einer Einrichtung (25) zum Festspannen der Nabe (2) in einer Mittelachse (1), mit einer Vielzahl der Anzahl der Speichen (3) entsprechenden Spanneinheiten (15, 21) zum Verdrehen jeweils eines Nippels auf der zugehörigen Speiche (3), insbesondere nach mindestens einem der Ansprüche 1 bis 3, **dadurch gekennzeichnet, dass** die Einrichtung (25) zum Festspannen der Nabe (2) in der Mittelachse (1) verfahrbar ausgebildet ist, dass eine Einrichtung (7, 20) zum zentrierenden Festspannen der Felge (4) auf einer Bezugsebene (5) relativ zur Mittelachse (1) vorgesehen ist, und dass die Spanneinheiten (15, 21) auf beide Seiten der Bezugsebene (5) verteilt vorgesehen sind.

5. Maschine nach Anspruch 4, **dadurch gekennzeichnet, dass** die Einrichtung (7, 20) zum zentrierenden Festspannen der Felge (4) relativ zur Mittelachse (1) auf einer Bezugsebene (5) eine zumindest der einfachen Anzahl der Speichen (3) entsprechende Vielzahl von Spannköpfen (7, 20) aufweist.

6. Maschine nach mindestens einem der Ansprüche 4 oder 5, **dadurch gekennzeichnet, dass** die Einrichtung (25) zum Festspannen der Nabe (2) in der Mittelachse (1) zwei Spannfutter (27, 28) aufweist, die relativ zueinander und gemeinsam in der Mittelachse (1) verfahrbar sind.

7. Maschine nach mindestens einem der Ansprüche 4 bis 6, **dadurch gekennzeichnet, dass** die Spannköpfe (27, 28) beidseitig der Bezugsebene (5) bzw. der Radebene (6) vorgesehen und radial zur Mittelachse (1) zentrierend verfahrbar sind, und dass zumindest die auf einer Seite der Bezugsebene (5) bzw. der Radebene (6) vorgesehenen Spannköpfe (20) auch in einer Richtung parallel zur Mittelachse (1) verfahrbar sind.

8. Maschine nach mindestens einem der Ansprüche 4 bis 7, **dadurch gekennzeichnet, dass** die Maschine eine horizontal ausgerichtete und festgelegte Bezugsebene (5) aufweist, und dass die Spanneinheiten (15, 21) zum Verdrehen der Nippel, die Spannköpfe (7, 20) zum Zentrieren und Fixieren der Felge (4) sowie die Spannfutter (27, 28) zum Zentrieren der Achse (26) der Nabe (2) anzahlmäßig hälftig geteilt und symmetrisch zu der Bezugsebene (5) angeordnet sind.

9. Maschine nach Anspruch 8, **dadurch gekennzeichnet, dass** die Spanneinheiten (21) zum Verdrehen der Nippel und die Spannköpfe (20) zum Zentrieren und Fixieren der Felge (4) auf der einen Seite der Bezugsebene (5) in einer Richtung (23) parallel zur Mittelachse (1) gemeinsam verfahrbar angeordnet sind, während die Spanneinheiten (15) zum Verdrehen der Nippel und die Spannköpfe (7) zum Zentrieren und Fixieren der Felge (4) auf der anderen Seite der Bezugsebene (5) in einer Richtung parallel zur Mittelachse (1) nicht verfahrbar angeordnet sind.

10. Maschine nach mindestens einem der Ansprüche 4 bis 9, **dadurch gekennzeichnet, dass** Sensoren (53, 24) zum Erfassen der Wege und Positionen der Spannfutter (27, 28) und/oder der Spannköpfe (20) vorgesehen sind.
